# EUROPEAN PATENT APPLICATION

(11) **EP 4 550 647 A1**
(43) Date of publication of application: **07.05.2025**
(21) Application number: 23206824.7
(22) Date of filing: 30.10.2023
(51) Int. Cl.: H02M 1/32, H02M 1/36, H02M 3/335, H02M 7/5387

(54) **POWER CONVERTERS AND METHODS OF CONTROLLING A POWER CONVERTER**

(71) Applicant: Thermo King LLC, Minneapolis, MN 55420 (US)
(72) Inventor: SCHUMACHER, Ryan Wayne, Bloomington, 55437 (US); GORSKI, Matthias, 44866 Bochum (DE); WANG, Xiaorui, Bloomington, 55435 (US)
(74) Representative: Haseltine Lake Kempner LLP

(57) **Abstract**

The present disclosure relates to a method 300 of controlling a power converter 230, 240, 250. The power converter 230, 240, 250 comprises: input terminals 232, 234, 242, 244, 252, 254 configured to receive an input voltage; a plurality of input switches 651-656 configured as one or more half-bridges, each half bridge comprising a high-side input switch 651, 653, 655 and a low-side input switch 652, 654, 656; and a capacitor 630 couplable to the input terminals 232, 234, 242, 244, 252, 254 so as to receive the input voltage. The method 300 comprises: operating the power converter 230, 240, 250 in a discharging mode 330 which comprises closing a high-side input switch 651, 653, 655 and a low-side input switch 652, 654, 656 to complete a discharge circuit between first and second terminals of the capacitor 630. The present disclosure further relates to a power converter 230, 240, 250 comprising means 290 adapted to carry out such a method 300.

## Description

### FIELD OF THE INVENTION

The present disclosure relates to methods of controlling a power converter. The present disclosure also relates to power converters comprising means adapted to carry out such methods.

### BACKGROUND OF THE INVENTION

It is known to provide means for precharging and/or discharging a DC link of a power converter. Such means may include dedicated precharging and/or discharging circuitry coupled to the power converter and controllable to supply electrical energy to, or receive electrical energy from, the power converter for these purposes. Precharging the DC link of a power converter is associated with improved operation of the power converter during use, whereas discharging the DC link of a power converter is associated with better safety of the power converter after use.

Conventional methods and means of precharging and/or discharging the DC link of a power converter may require the use of large active charge/discharge circuits. Additionally or alternatively, conventional methods and means for precharging and/or discharging the DC link of a power converter may affect the operation of other components of an electrical system of which the power converter forms a part. For example, if a power converter is electrically coupled to an electrical bus which is configured to act as an intermediary between the power converter and other electrical components (e.g., other power converters) of an electrical system, precharging and/or discharging of the DC link of the power converter using conventional techniques may require the decoupling of the other electrical components from the electrical bus and/or variation of the operation of the other electrical components.

It is desirable to provide improved methods and means of precharging and/or discharging the DC link of a power converter. It is particularly desirable to provide improved methods and means of discharging a power converter. The present invention has been devised with the foregoing in mind.

### BRIEF SUMMARY OF THE INVENTION

According to a first aspect there is provided a method of controlling a power converter, the power converter comprising: input terminals configured to receive an input voltage; a plurality of input switches configured as one or more half-bridges, each half bridge comprising a high-side input switch and a low-side input switch; and a capacitor couplable to the input terminals so as to receive the input voltage, the method comprising: operating the power converter in a discharging mode which comprises closing a high-side input switch and a low-side input switch to complete a discharge circuit between first and second terminals of the capacitor.

It may be that the method comprises selectively operating the power converter in the discharging mode or a running mode, wherein operating the power converter in the running mode comprises controlling the plurality of input switches to generate an output voltage based on the input voltage.

It may also be that the method comprises selectively operating the power converter in the discharging mode, the running mode or a charging mode, wherein operating the power converter in the charging mode comprises maintaining each high-side switch and/or each low-side switch in an open state and wherein, in the charging mode, the capacitor is electrically coupled to the pair of input terminals.

It may be that the power converter further comprises a resistor couplable in series with the capacitor such that a series combination of the capacitor and resistor is coupled in parallel with the input terminals and the or each half-bridge.

It may be that, in the charging mode, the capacitor is electrically couplable to the input terminals via the resistor.

It may be that the power converter further comprises a routing switch couplable in series with the capacitor such that a series combination of the capacitor and routing switch is coupled in parallel with the input terminals and the or each half-bridge. Operating the power converter in the running mode may include controlling the routing switch to provide a current path between the capacitor and one of the plurality of input switches which bypasses the resistor. The resistor may form a part of the discharge circuit.

It may be that the power converter further comprises a diode couplable in series with the capacitor such that a series combination of the capacitor and diode is coupled in parallel with the input terminals and the or each half-bridge.

It may be that the power converter further comprises a routing switch couplable in series with the capacitor such that a series combination of the capacitor and routing switch is coupled in parallel with the input terminals and the or each half-bridge. Operating the power converter in the running mode includes controlling the routing switch to provide a current path between the capacitor and one of the input switches which bypasses the diode. The diode may form a part of the discharge circuit.

It may be that the resistor and the diode are coupled in parallel with each other.

It may be that operating the power converter in the discharging mode comprises closing a high-side switch and a low-side switch of the same half-bridge.

The discharge circuit completed in the discharging mode may be entirely disposed within the power converter.

It may be that the power converter is configured to supply an output voltage to a winding of a motor, and wherein the winding forms a part of the discharge circuit.

According to a second aspect there is provided a power converter comprising input terminals, a plurality of input switches, a capacitor and means adapted to carry out a method in accordance with the first aspect.

According to a third aspect there is provided a computer program comprising instructions to cause a power converter in accordance with the second aspect to execute the steps of a method in accordance with the first aspect.

According to a fourth aspect there is provided a computer-readable medium having stored thereon a computer program in accordance with the third aspect.

According to a fifth aspect there is provided an electrical system comprising a multiplicity of power converters, each power converter being in accordance with a power converter in accordance with the second aspect.

According to a sixth aspect there is provided a transport refrigeration unit comprising a power converter in accordance with the second aspect or an electrical system in accordance with the fifth aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising an electrical system and a vapour-compression refrigeration circuit;
**FIG. 3** is a circuit diagram which shows a first example power converter suitable for use with the electrical system of FIG. 2;
**FIG. 4** is a circuit diagram which shows a second example power converter suitable for use with the electrical system of FIG. 2;
**FIG. 5** is a circuit diagram which shows a third example power converter suitable for use with the electrical system of FIG. 2;
**FIGs. 6A-6E** are circuit diagrams which show example routing units suitable for use with any of the example power converters of FIGs. 3-5;
**FIG. 7** is a flowchart which shows an example method of operating a power converter in accordance with the present disclosure; and
**FIG. 8** is a highly schematic diagram of a machine-readable medium having stored thereon a computer program which, when executed by a controller, causes the controller to perform the example method of FIG. 7.

### DETAILED DESCRIPTION OF THE INVENTION

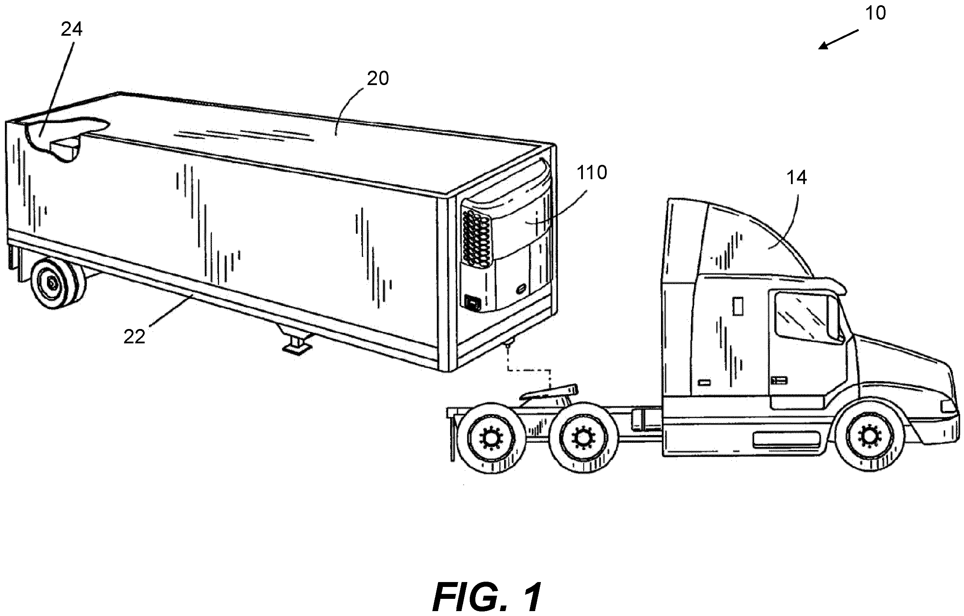

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 can take the form of multiple compartments or have multiple zones. The structure 22 includes a chassis. The structure 22 supports the TRU 110. The vehicle 10 further comprises a tractor unit 14 removably couplable to the trailer.

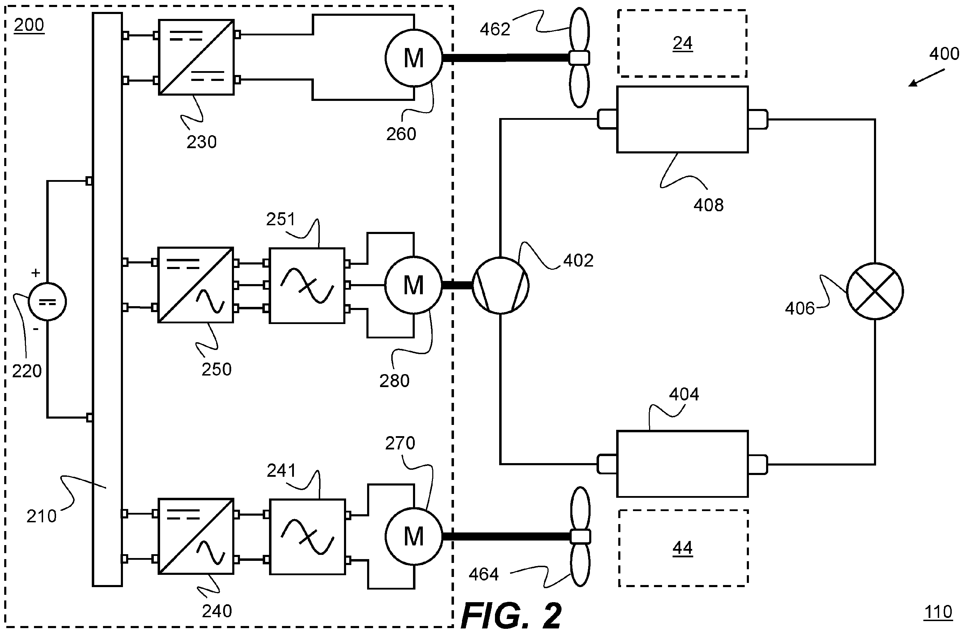

**FIG. 2** schematically shows a diagram of an example TRU 110 suitable for use within the vehicle 10 and the transport refrigeration system 20 of FIG. 1. The TRU 110 comprises a vapour-compression refrigeration circuit 400 and an electrical system 200.

The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The TRU 110 also comprises a plurality of fans 462, 464. In the example of FIG. 2, a first fan 462 is associated with (e.g., located in proximity to) the evaporator 408 for improving heat transfer at one or more surfaces of the evaporator 408, and a second fan 464 is associated with (e.g., located in proximity to) the condenser 404 for improving heat transfer at one or more surfaces of the condenser 404.

The electrical system 200 comprises a DC bus 210, a DC power supply 220, a plurality of power converters 230, 240 and 250, and a plurality of electric motors 260, 270 and 280. This disclosure envisages that the DC power supply 210 may not form part of the electrical system 200 as such, and that the DC bus 210 may instead be couplable to, and hence configured to receive electrical power from, a DC power supply 220.

A first electric motor 260 (i.e., a first of the plurality of electric motors) is mechanically coupled to, and is thus configured to mechanically drive, the first fan 462. A second electric motor 270 (i.e., a second of the plurality of electric motors) is mechanically coupled to, and is configured to mechanically drive, the second fan 464. A third electric motor 280 (i.e., a third of the plurality of electric motors) is mechanically coupled to, and is therefore configured to mechanically drive, the compressor 402.

Thus, the electrical system 200 may be operated to drive the compressor 402 and thereby control the vapour-compression refrigeration circuit 400. The compressor 402 may be any suitable type of compressor, as will be apparent to those skilled in the art. However, in particular examples, the compressor 402 may be a reciprocating compressor (e.g., a piston compressor) or a scroll compressor.

A first power converter 230 (i.e., a first of the plurality of power converters) is electrically coupled to, and is configured to electrically drive, the first electric motor 260. A second power converter 240 (i.e., a second of the plurality of power converters) is electrically coupled to, and is therefore configured to electrically drive, the second electric motor 270. A third power converter 250 (i.e., a third of the plurality of power converters) is electrically coupled to, and is therefore configured to electrically drive, the third electric motor 280.

An input side of each power converter 230, 240, 250 is configured to receive an input DC voltage from the DC bus 210 (e.g., an input DC voltage having a magnitude which corresponds to an operating voltage of the DC bus 210), whereas an output side of each power converter 230, 240, 250 is configured to provide at least one output voltage to the respective electric motor 260, 270, 280 for electrical driving thereof.

The first electric motor 260 is a DC electric motor and the first power converter 230 is a DC-DC converter 230 (e.g., a DC-DC converter 230). The first electric motor 260 may be a permanent-magnet DC motor, a series DC motor, a shunt DC motor, a compound DC motor or the like.

The DC-DC converter 230 is generally configured to convert the input DC voltage supplied to the input side of the DC-DC converter 230 at a first magnitude (i.e., at a magnitude corresponding to the operating voltage of the DC bus 210) to an output DC voltage at a second magnitude for supply to the first electric motor 260 from the output side of the DC-DC converter 230. A ratio between the first magnitude and the second magnitude may be referred to as a conversion ratio of the DC-DC converter 230. The conversion ratio of the DC-DC converter 230 is controllable as described in further detail herein. If the conversion ratio of the DC-DC converter 230 is greater than unity, the DC-DC converter 230 performs a boost (or a step-up) function in use. On the other hand, if the conversion ratio of the DC-DC converter is less than unity, the DC-DC converter 230 performs a buck (or a step-down) function in use.

The second electric motor 270 is a single-phase AC electric motor and the second power converter 240 is a single-phase DC-AC power converter 240 (e.g., a single-phase DC-AC converter 240 or a single phase inverter 240). The second electric motor 270 may be, for example, an induction motor (i.e., an asynchronous motor). To this end, the second electric motor 270 include a main winding, an auxiliary winding, a start capacitor and/or a run capacitor, as will be appreciated by those skilled in the art.

The single-phase inverter 240 is generally configured to convert the input DC voltage supplied to the input side of the single-phase inverter 240 to an output AC voltage for supply to the second electric motor 270 from the output side of the single-phase inverter 240. A frequency of the output AC voltage for supply to the second electric motor 270 is controllable as described in further detail herein.

A single-phase passive filter 241 is electrically coupled between the output side of the single-phase inverter 240 and the second electric motor 270. The single-phase passive filter 241 is configured to attenuate high-frequency components in the output AC voltage supplied to the second electric motor 270 from the output side of the single-phase inverter 240 to increase a conformity of a temporal profile of the output AC voltage supplied to the second electric motor 270 with a sinusoid. The single-phase passive filter 241 therefore functions as a low-pass filter in use. The single-phase passive filter 241 may include a T-filter topology or a pi-filter topology, as will be understood by those skilled in the art.

The third electric motor 280 is a multiple-phase AC electric motor and the third power converter 250 is a multiple-phase DC-AC power converter 250 (e.g., a multiple-phase DC-AC converter 250 or a multiple-phase inverter 250). The third electric motor 280 may be, for example, an induction motor (i.e., an asynchronous motor). Consequently, the third electric motor 280 may include a plurality of phase windings, as will be appreciated by those skilled in the art. In this example, the third electric motor 280 is a three-phase AC electric motor.

The multiple-phase inverter 250 is generally configured to convert the input DC voltage supplied to the input side of the multiple-phase inverter 250 to a plurality of output AC voltages for supply to the third electric motor 280 from the output side of the multiple-phase inverter 250. A frequency and a phase of each output AC voltage for supply to the third electric motor 280 is controllable as described in further detail herein.

A multiple-phase passive filter 251 is electrically coupled between the output side of the multiple-phase inverter 250 and the third electric motor 280. The multiple-phase passive filter 251 is configured to attenuate high-frequency components in each of the output AC voltages supplied to the third electric motor 280 from the output side of the multiple-phase inverter 250 to increase a conformity of a temporal profile of each output AC voltage supplied to the third electric motor 280 with a sinusoid. The multiple-phase passive filter 251 therefore functions as a low-pass filter in use. The multiple-phase passive filter 251 may include one or more T-filter topologies and/or one or more pi-filter topologies, as will be understood by those skilled in the art.

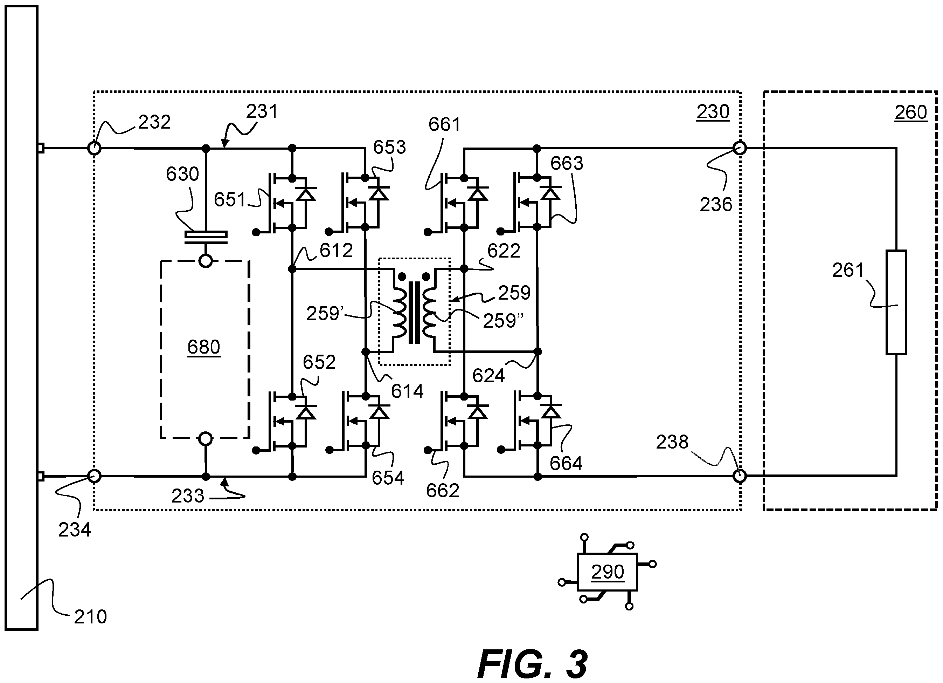

**FIG. 3** is a circuit diagram showing the first power converter 230 and the first electric motor 260 in more detail. The DC-DC converter 230 is an isolated DC-DC converter 230 which includes a transformer 259 having an input coil 259' and an output coil 259", with the input side of the DC-DC converter 230 comprising the input coil 259' of the transformer and the output side of the DC-DC converter 230 comprising the output coil 259" of the transformer. In this way, the input side of the DC-DC converter 230 is galvanically isolated from the output side of the DC-DC converter 230, but the input side of the DC-DC converter 230 is electromagnetically coupled to the output side of the DC-DC converter 230 by the transformer 259.

The input side of the DC-DC converter 230 is configured to receive the input DC voltage from the DC power supply 220 via the DC bus 210 through input terminals 232, 234. The output side of the DC-DC converter is configured to supply the output DC voltage to the first electric motor 260 through a pair of output terminals 236, 238. The first electric motor 260 is shown in FIG. 3 as comprising a winding 261, which may include any suitable combination of a resistive load, an inductive load and a capacitive load. The winding 261 may be more generally referred to as a load 261.

The input side of the DC-DC converter 230 comprises a plurality of switches and the input coil 259' of the transformer 259. The plurality of input switches are arranged, in this example, as first and second input half-bridges. The first input half-bridge comprises a first high-side switch 651 and a first low-side switch 652, while the second input half-bridge comprises a second high-side switch 653 and a second low-side switch 654. Therefore, the input side of the DC-DC converter 230 comprises a plurality of high-side switches 651, 653 and a plurality of low-side switches 652, 654. A first terminal of the input coil 259' is coupled to a first input half-bridge output node 612 between the first high-side switch 651 and the first low-side switch 652 of the first input half-bridge. A second terminal of the input coil 259' is coupled to a second input half-bridge output node 614 between the second high-side switch 653 and the second low-side switch 654 of the second input half-bridge.

The output side of the DC-DC converter 230 comprises a plurality of output switches and the output coil 259" of the transformer 259. The plurality of output switches are arranged, in this example, as first and second output half-bridges. The first output half-bridge comprises a first high-side switch 661 and a first low-side switch 662, while the second output half-bridge comprises a second high-side switch 663 and a second low-side switch 666. A first terminal of the output coil 259" is coupled to a first output half-bridge output node 622 between the first high-side switch 661 and the first low-side switch 662 of the first output half-bridge. A second terminal of the output coil 259" is coupled to a second output half-bridge output node 624 between the second high-side switch 663 and the second low-side switch 664 of the second output half-bridge.

As will be recognisable to those skilled in the art, the plurality switches of the input side and the input coil 259' of the transformer 259 are mutually connected to each other in a typical dual active bridge power converter arrangement.

As will also be recognisable to those skilled in the art, the plurality of output switches of the output side and the output coil 259" of the transformer 259 are mutually connected to each other in a typical dual active bridge converter arrangement.

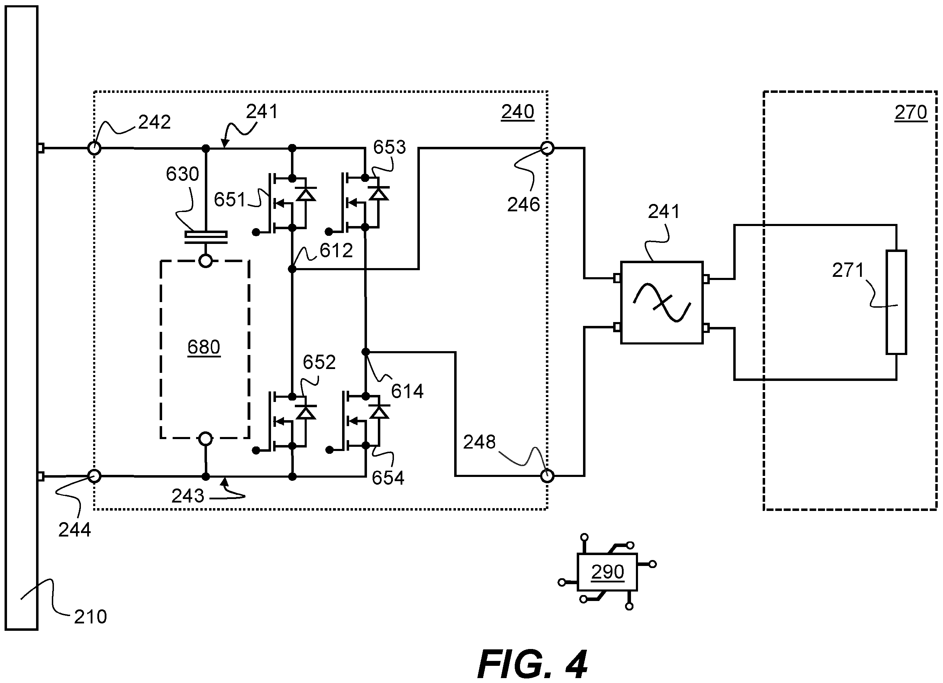

**FIG. 4** is a circuit diagram showing the second power converter 240 and the second electric motor 270 in more detail. The second power converter 240 shares some common features with the first power converter 230 described above with reference to FIG. 3, with those common features being denoted using like reference signs.

However, in contrast to the first power converter 230, the second power converter 240 is a single-phase AC-DC converter 240 comprising an H-bridge inverter circuit. The second power converter 240 therefore does not comprise a transformer or a plurality of output switches. The plurality of input switches 651, 652, 653, 654 are arranged as a first half-bridge (comprising a first high-side switch 651 and a first low-side switch 652) and a second half-bridge (comprising a second high-side switch 652 and a second low-side switch 654) which together form a single-phase H-bridge inverter circuit, as will be recognisable to those skilled in the art.

The input side of the single-phase AC-DC converter 240 is configured to receive the input DC voltage from the DC power supply 220 via the DC bus 210 through input terminals 242, 244. The output side of the single-phase AC-DC converter 240 is configured to provide the output AC voltage to the second electric motor 270 through a pair of output terminals 246, 248. The second electric motor 270 is shown by FIG. 4 as comprising a winding 271, which may include any suitable combination of a resistive load, an inductive load and a capacitive load. A first half-bridge output node 612 is connected to a first terminal of the motor winding 271 and a second half-bridge output node 614 is connected to a second terminal of the motor winding 271 (each through the single-phase filter 241 described above with reference to FIG. 2). The winding 271 may be more generally referred to as a load 271.

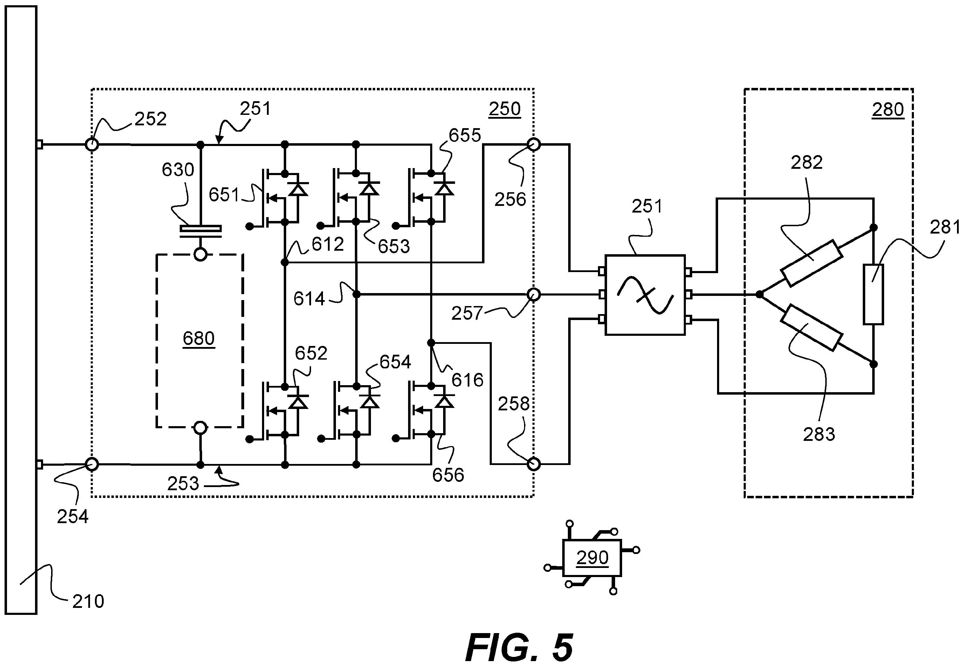

**FIG. 5** is a circuit diagram showing the third power converter 250 and the third electric motor 280 in more detail. The third power converter 250 shares many common features with the second power converter 240 described above with reference to FIG. 4, with those common features being denoted using like reference signs.

In contrast to the second power converter 240, the third power converter 250 is a three-phase AC-DC converter 250. The third power converter 250 therefore comprises first, second and third half-bridges, each comprising a respective high-side switch 651, 653, 655 and a respective low-side switch 652, 654, 656. The first, second and third half-bridges are arranged so as to form a three-phase H-bridge inverter circuit, as will be recognisable to those skilled in the art.

The input side of the three-phase AC-DC converter 250 is configured to receive the input DC voltage from the DC power supply 220 via the DC bus 210 through input terminals 252, 254. The output side of the three-phase AC-DC converter 250 is configured to supply the output AC voltages to the third electric motor 280 through first, second and third output terminals 256, 257, 258. The third electric motor 280 is shown by FIG. 5 as comprising first, second and third windings 281, 282, 283, each of which may include any suitable combination of a resistive load, an inductive load and a capacitive load. In the specific example of FIG. 5, the first, second and third windings 281, 282, 283 are arranged in a delta configuration, but this is purely for illustrative purposes. For instance, the first, second and third windings 281, 282, 283 may be arranged in a wye configuration. A first half-bridge output node 612 is coupled to and between a terminal of the first motor winding 281 and a terminal of the second motor winding 282, a second half bridge output node 614 is connected to and between a terminal of the second motor winding 282 and a terminal of the third motor winding 283, and a third half bridge output node 616 is connected to and between a terminal of the third motor winding 283 and a terminal of the first motor winding 281 (each through the three-phase filter 251 described above with reference to FIG. 2). The windings 281, 282, 283 may be more generally and simply referred to as loads 281, 282, 283.

In each of the examples of FIGs. 3-5, a first input connection rail 231, 241, 251 extends between the first input terminal 232, 242, 252 and the first high-side switch 651 to provide an electrical connection between the first input terminal 232, 242, 252 and the plurality of high-side switches 651, 653, 655. Similarly, a second input connection rail 233, 243, 253 extends between the second input terminal 234, 244, 254 and the first low-side switch 652 to provide an electrical connection between the second input terminal 234 and the plurality of low-side switches 652, 654, 656. In use, the first input connection rail 231, 241, 251 is connected to a positive terminal of the DC power supply 220 via the DC bus 210 whereas the second input connection rail 233, 243, 253 is connected to a reference voltage (e.g. ground or negative) terminal of the DC power supply 220 via the DC bus 210. As a result, an electric potential of the first input connection rail 231, 241, 251 is higher than an electric potential of the second input connection rail 233, 243, 253 during use. Therefore, the first input connection rail 231, 241, 251 may be referred to as a positive input connection rail 231, 241, 251 and the second input connection rail 233, 243, 253 may be referred to as a negative input connection rail 233, 243, 253. The first input connection rail 231, 241, 251 and the second input connection rail 233, 243, 253 together form a DC link of the power converter 230, 240, 250.

Further, in each of the examples of FIGs. 3-5, a DC link capacitor 630 is couplable between the input terminals 232, 234, 242, 244, 252, 254, in parallel with the (input) half-bridges 651, 652, 653, 654, 655, 656. Accordingly, the capacitor 630 can be coupled so as to receive the voltage supplied by the DC bus 210. The capacitor 630 therefore acts to smooth the voltage received by the (input) half-bridges by reducing temporal variations (i.e., ripple) in the voltage supplied by the DC bus 210. The capacitor 630 comprises a first terminal and a second terminal, each of which correspond to a respective side (e.g., a respective plate) of the capacitor 630.

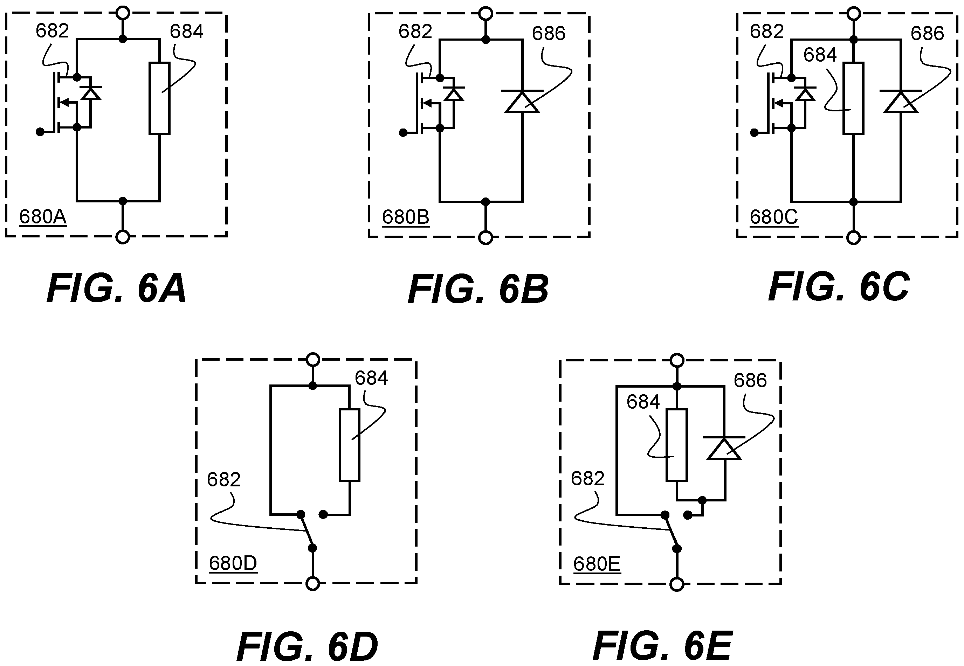

The first terminal of the capacitor 630 is electrically coupled to the first input connection rail 231, 241, 251 while the second terminal of the capacitor 630 is electrically coupled to a routing unit 680. The routing unit 680 is in turn electrically coupled to the second input connection rail 233, 243, 253. The routing unit 680 comprises a routing switch, as described in further detail with respect to the example topologies shown in FIGs. 6A-6E below.

Each power converter 230, 240, 250 is functionally provided with (e.g., comprises) a respective controller 290 configured to control operation of the power converter. To this end, the controller 290 is communicatively coupled with each of the plurality of input switches, each of the plurality of output switches (if present) as well as the routing unit 680.

**FIG. 6A** is a circuit diagram showing a first example routing unit topology 680A suitable for use as in the routing unit 680 as part of any of the example power converters 230, 240, 250 described above with reference to FIGs. 3-5. The routing unit 680A comprises a switch 682 (which may be referred to herein as a routing switch 682) positioned such that, when the routing unit 680A is incorporated within the power converter 230, 240, 250, the routing switch 682 is connected in series between the second terminal of the capacitor 630 and the second input connection rail. That is, the second terminal of the capacitor 630 is electrically coupled to the second input connection rail via the routing switch 682. Therefore, the routing switch 682 is coupled in series with the capacitor 630 such that a series combination of the capacitor 630 and routing switch 682 is coupled in parallel with respect to both the input terminals 232, 234, 242, 244, 252, 254 and each input half-bridge. In this example, the routing switch 682 is a field effect transistor (FET). However, other types of switches useable as part of a routing unit 680 for the purposes described herein will now be apparent to those skilled in the art.

The routing unit 680A also comprises a resistor 684 (which may be referred to herein as a routing resistor 684) coupled in parallel with the routing switch 682 such that, when the routing unit 680A is incorporated within the power converter 230, 240, 250, the routing resistor 684 is coupled in series between the second terminal of the capacitor 630 and the second input connection rail 233, 243, 253. In this way, the routing resistor 684 is coupled in series with the capacitor 630 such that a series combination of the capacitor 630 and routing resistor 684 is coupled in parallel with respect to both the input terminals 232, 234, 242, 244, 252, 254 and each input half-bridge.

Accordingly, the routing unit 680A provides two possible current paths between the second terminal of the capacitor 630 and the second input connection rail 233, 243, 253 of the power converter 230, 240, 250: one through the routing switch 682 (bypassing the routing resistor 684) and another through the routing resistor 684. When the routing switch 682 is in an open or off state (i.e., a state in which it does not conduct), only the current path through the routing resistor 684 is available. When the routing switch 682 is in a closed or on state (i.e., a state in which it conducts), both of the current paths discussed above are available.

However, when the routing switch 682 is in a closed or on state (i.e., a state in which it does conduct), the current path through the routing FET switch 682 has a significantly lower resistance than the current path through the routing resistor 684 and thus current flows through the routing FET switch 682 from the second terminal of the capacitor 630 to the second input connection rail 233 243, 253.

**FIG. 6B** is a circuit diagram showing a second example routing unit topology 680B suitable for use in the routing unit 680 as part of any of the example power converters 230, 240, 250 described above with reference to FIGs. 3-5. The routing unit 680B is generally similar to the routing unit 680A described above with reference to FIG. 6A, with like reference signs denoting common features. However, in the example shown in FIG. 6B, the routing resistor 684 has been replaced with a diode 686 (which may be referred to herein as a routing diode 686).

The routing diode 686 is coupled in parallel with the routing switch 682 such that, when the routing unit 680B is incorporated within the power converter 230, 240, 250, the routing diode 686 is coupled in series between the second terminal of the capacitor 630 and the second input connection rail 233, 243, 253, with an anode of the routing diode 686 being coupled to the second input connection rail 233, 243, 253 and a cathode of the routing diode 686 being coupled to the second terminal of the capacitor 630. In other words, the routing diode 686 is coupled in series with the capacitor 630 such that a series combination of the capacitor 630 and routing diode 686 is coupled in parallel with respect to both the input terminals 232, 234, 242, 244, 252, 254 and each input half-bridge.

Consequently, the routing unit 680B provides two possible current paths between the second input connection rail 233, 243, 253 of the power converter 230, 240, 250 and the second terminal of the capacitor 630: one through the routing switch 682 and another through the routing diode 686. When the routing switch 682 is in the open state, current cannot flow from the second terminal of the capacitor 630 to the second input connection rail 233, 243, 253 of the power converter 230, 240, 250, because there is no current path through the routing switch 682, and the routing diode 686 is reverse biased, thus blocking current flow from the second terminal of the capacitor 630 to the second input connection rail 233, 243, 253 of the power converter 230, 240, 250. However, current can flow from the second input connection rail 233, 243, 253 of the power converter 230, 240, 250 to the second terminal of the capacitor 630 through the routing diode 686. When the routing switch 682 is in the closed state, current can flow from the second terminal of the capacitor 630 through the routing switch 682 to the second input connection rail 233, 243, 253 of the power converter 230, 240, 250, and can flow from the second input connection rail 233, 243, 253 of the power converter 230, 240, 250 through the routing switch 682 and/or the routing diode 686 to the second terminal of the capacitor 630.

**FIG. 6C** is a circuit diagram showing a third example routing unit topology 680C suitable for use in the routing unit 680 as part of any of the example power converters 230, 240, 250 described above with reference to FIGs. 3-5. The routing unit 680C is generally similar to the routing units 680A, 680B described above with reference to FIGs. 6A and 6B, with like reference signs denoting common features. In the example shown by FIG. 6B, the routing unit 680C comprises both a routing resistor 684 and a routing diode 686. The routing resistor 684 and the routing diode 686 are connected in parallel with the routing switch 682 such that, when the routing unit 680C is incorporated within the power converter 230, 240, 250, the routing resistor 684 and routing diode 686 are each coupled in series between the second terminal of the capacitor 630 and the second input connection rail 233, 243, 253, with an anode of the routing diode 686 being coupled to the second input connection rail 233, 243, 253 and a cathode of the routing diode being coupled to the second terminal of the capacitor 630.

It follows that the routing unit 680C provides three possible current paths between the second terminal of the capacitor 630 and the second input connection rail 233, 243, 253 of the power converter 230, 240, 250: one through the routing FET switch 682, another through the routing resistor 684 and yet another through the routing diode 686. When the routing FET switch 682 is in the open state, current can only flow from the second terminal of the capacitor 630 to the second input connection rail 233, 243, 253 of the power converter 230, 240, 250 through the resistor 684, because there is no current path through the routing switch 682, and the routing diode 686 is reverse biased. However, current can flow from the second input connection rail 233, 243, 253 of the power converter 230, 240, 250 to the second terminal of the capacitor 630 through the resistor 684 or the routing diode 686.

When the routing FET switch 682 is in the closed state, current can flow from the second terminal of the capacitor 630 through the routing switch 682 or the resistor 684 to the second input connection rail 233, 243, 253 of the power converter 230, 240, 250, and can flow from the second input connection rail 233, 243, 253 of the power converter 230, 240, 250 through the routing switch 682, the resistor 684 and/or the routing diode 686 to the second terminal of the capacitor 630.

That said, when the routing switch 682 is in the open state, conventional electric current electric current will generally preferentially flow from the second input connection rail 233, 243, 253 to the second terminal of the capacitor 630 through the current path through the diode 686 rather than through the current pathway through the routing resistor 684 due to a significantly lower impedance associated with the former.

**FIGs. 6D** and **6E** are circuit diagrams showing a fourth and fifth example routing unit topologies 680D, 680E suitable for use as in the routing unit 680 as part of any of the example power converters 230, 240, 250 described above with reference to FIGs. 3-5. The fourth and fifth example routing unit topologies 680D, 680E are generally similar to the first and third example routing unit topologies 680A, 680C described above with reference to FIGs. 6A and 6C. However, in the example routing unit topologies 680D, 680E shown in FIGs. 6D and 6E, the routing switch 682 is a single-pole double-throw (SPDT) switch (e.g., a SPTD relay) rather than a FET. To accommodate this, the layout of the fifth example routing unit topology 680E differs to that of the third example routing unit topology 680C so as to ensure that the resistor 684 and the diode 686 are always connected in parallel with each other regardless of the position of the SPDT switch 682.

When the routing SPDT switch 682 is in a first state thereof (i.e., the state shown in FIGs. 6D-6E), the only current path between the second terminal of the capacitor 630 and the second input connection rail 233, 243, 253 which is available bypasses the resistor 684 and/or the diode 686, as the case may be. In contrast, when the routing SPDT switch 682 is in a second state thereof (i.e., the state not shown in FIGs. 6D-6E), one or more current pathways between the second terminal of the capacitor 630 and the second input connection rail 233, 243, 253 are available, each of which passes through the resistor 684 or the diode 686, as the case may be. Specifically, with respect to the fifth example routing unit topology 680E, when the routing FET switch 682 is in the second state, current can only flow from the second terminal of the capacitor 630 to the second input connection rail 233, 243, 253 of the power converter 230, 240, 250 through the resistor 684, because the routing diode 686 is reverse biased. However, current can flow from the second input connection rail 233, 243, 253 of the power converter 230, 240, 250 to the second terminal of the capacitor 630 through the resistor 684 or the routing diode 686

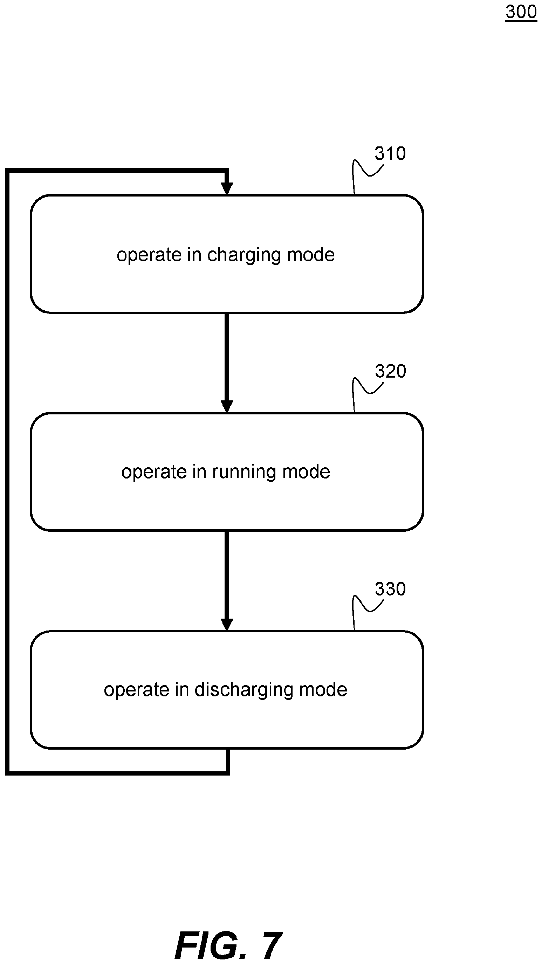

**FIG. 7** is a flowchart showing an example method 300 of operating a power converter (e.g., any of the example power converters described above with respect to FIGs. 3-5) in accordance with the present disclosure. The method(s) described herein may be carried out by a suitable data processing apparatus, such as the controller 290 described above with respect to FIGs. 3-5. In other words, the controller 290 may be configured to carry out the method(s) described herein (e.g., the method 300).

The method 300 includes an action of operating, at block 310, the power converter in a DC link charging mode (which may be referred to using reference numeral 310) during which a charging process is performed to charge the DC link capacitor 630. In general terms, the action of operating the power converter 230, 240, 250 in the charging mode 310 includes controlling the half-bridges such that current may not flow from the first input connection rail 231, 241, 251 of the power converter 230, 240, 250 to the second input connection rail 233, 243, 253 of the power converter 230, 240, 250 via the half-bridges and/or via the load(s) 261, 271, 281, 282, 283.

To this end, the action of operating the power converter 230, 240, 250 in the charging mode 310 includes opening one or both of the high-side switch and the low-side switch of each of the half-bridges such that current cannot flow through any of the half-bridges from the first input connection rail 231, 241, 251 of the power converter 230, 240, 250 to the second input connection rail 233, 243, 253 of the power converter 230, 240, 250 s. In the context of the first example power converter 230 and the second example power converter 240, the action of operating the power converter 230, 240 in the charging mode 310 includes opening both the first high-side switch 651 and the second high-side switch 651 (and maintaining these switches in an open or off state in which they do not conduct) and/or opening both the first low-side switch 652 and the second low-side switch 654 (and maintaining these switches in the open state). Otherwise, in the context of the third example power converter 250, the action of operating the power converter 250 in the charging mode 310 includes maintaining each of the first high-side switch 651, the second high-side switch 653 as well as the third high-side switch 653 and/or each of the first low-side switch 652, the second low-side 654 as well as the third low-side switch 656 in the open state.

The action of operating the power converter 230, 240, 250 in the charging mode 310 also includes forming a charge circuit for charging the capacitor 630 using the input DC voltage received from the DC bus 210. For this purpose, the action of operating the power converter 230, 240, 250 in the charging mode 310 may include controlling the routing unit 680 appropriately such that the resistor 684 (if present) and/or the diode 684 (if present) forms a part of the charge circuit. By way of example, appropriate control of the routing unit 680 in the charging mode 310 may include controlling the routing switch 682 such that the only conduction path between the second terminal of the capacitor 630 and the second input connection rail 233, 243, 253 includes the resistor 684. By way of further example, in the context of the routing unit topologies 680A-680C described above with reference to FIGs. 6A-6C, appropriate control of the routing unit 680 may include maintaining the routing switch 682 in the open state thereof (i.e., in the non-conducting state). By way of further example, in the context of the routing unit topologies 680D-680E described above with reference to FIGs. 6D-6E, appropriate control of the routing unit 680 may include maintaining the routing SPDT switch 682 in the second state thereof (i.e., the state not shown in FIGs. 6D-6E).

Inclusion of the resistor 684 within the charge circuit formed in the charging mode 310 ensures that a peak electric current flowing through the charge circuit is effectively limited by the impedance of the resistor 684. That is, a transient inrush current associated with electrical coupling of the terminals of the capacitor 630 to the DC bus 210 may be limited by control of the routing unit 680 in the manner described above.

The power converter 230, 240, 250 may be operated in the charging mode 310 until a potential difference across the capacitor 630 (i.e., a voltage of the DC link) has reached (e.g., is equal to or greater than) a predetermined precharging voltage threshold. The precharging voltage threshold may be set having regard to the operating voltage of the DC bus 210. For example, the precharging voltage threshold may be set as being equal to, or within a tolerance range of, the operating voltage of the DC bus 210. This facilitates a smooth transition from operation of the power converter 230, 240, 250 from the charging mode 310 another mode, such as the running mode discussed below with reference to block 320. When the potential difference across the capacitor 630 reaches the precharging voltage threshold, the charging process undergone in the charging mode 310 may be described as being complete.

A rate at which the capacitor 630 charges to the precharging voltage threshold is dependent, at least in part, by a total impedance of the charge circuit. Thus, a relatively lower total impedance of the charge circuit will result in faster charging of the capacitor 630 than a relatively higher total impedance of the charge circuit.

The method 300 also includes an action of operating, at block 320, the power converter in a running mode (which may be referred to using reference numeral 320). In broad terms, the action of operating the power converter in the running mode 320 includes controlling of each of the half-bridges to convert the input DC voltage into the relevant output voltage(s) (e.g., the output DC voltage, the output AC voltage, or the output AC voltages as applicable). One or more operating parameters of the input switches, e.g. a switching frequency, a switching phase or a duty cycle of each of the plurality of input switches may be controlled to convert the input DC voltage into the relevant output voltage(s).

In the context of the first power converter 230 described above with reference to FIG. 3, the operating parameter of each of the plurality of input switches (e.g., the duty cycle and/or the switching frequency) may be controlled in the running mode 320 to vary the conversion ratio of the DC-DC converter 230 between a small non-zero value which is less than unity, and a large non-infinite value which is greater than unity. A corresponding parameter of each of the plurality of output switches (e.g., a duty cycle and/or a switching frequency) may be controlled accordingly. The output DC voltage for provision to the first motor 260 via the pair of output terminals 236, 238 may be controlled (e.g., varied) in this manner. Operating the first power converter 230 in the running mode 320 may thus allow the first power converter 230 to be used as a DC motor drive for the first motor 260.

Otherwise, in the context of the second power converter 240 described above with reference to FIG. 4, the operating parameter of each of the plurality of input switches (e.g., the switching frequency) may be controlled in the running mode 320 to vary the frequency of the output AC voltage for supply to the second electric motor 270 via the output terminals 246, 248. The output AC voltage provided to the second motor 270 via the pair of output terminals 246, 248 may be controlled (e.g., varied) in this way. Operating the second power converter 240 in the running mode 320 may thus allow the second power converter 240 to be used as an AC motor drive (e.g., a variable frequency AC motor drive) for the second motor 270.

Additionally, in the context of the third power converter 250 described above with reference to FIG. 5, the or each operating parameter of each of the plurality of input switches (e.g., the switching frequency and/or the switching phase) may be controlled in the running mode 320 to vary the frequency and/or the phase of the output AC voltages for supply to the third electric motor 280 via the output terminals 256, 258. The output AC voltages provided to the third motor 280 via the output terminals 256, 257, 258 may be controlled (e.g., varied) in this manner. Operating the third power converter 250 in the running mode 320 may thus allow the third power converter 270 to be used as a three-phase AC motor drive (e.g., a variable frequency and/or variable phase AC motor drive) for the third motor 280.

The action of operating the power converter 230, 240, 250 in the running mode 320 may also include controlling the routing unit 680 to provide a current path between the capacitor 630 and the second input connection rail 233, 243, 253/the input switches which bypasses the resistor 684 (see FIGs. 6A-6E). To this end, control of the routing unit 680 in the running mode 320 may include controlling the routing switch 682 such that a conduction path between the second terminal of the capacitor 630 and the second input connection rail 233, 243, 253 which does not include the resistor 684 is available. As an example, in the context of the routing unit topologies 680A-680C described above with reference to FIGs. 6A-6C, such control of the routing unit 680 may include closing the routing switch 682 (and maintaining it in the closed state). As another example, in the context of the routing unit topologies 680D-680E described above with reference to FIGs. 6D-6E, such control of the routing unit 680 may include maintaining the routing SPDT switch 682 in the first state thereof (i.e., the state shown in FIGs. 6D-6E).

Provision of current path between the capacitor 630 and the second input connection rail 233, 243, 253 which bypasses the resistor 684 in the running mode 320 reduces energy losses (e.g., Ohmic losses) within the routing unit 680 as the capacitor 630 acts to smooth the voltage received from the DC bus 210.

In the running mode 320, control of the or each operating parameter of each of the input switches is effected so as to ensure that a short-circuit across any of the input half-bridges es with respect to the DC bus 210 (i.e., a shoot-through condition) is not possible. Namely, in the running mode 320, a high-side switch 651, 653, 655 and a low-side switch 652, 654, 656 belonging to the same input half-bridge should never be simultaneously in a closed or on state (i.e., a state in which they do conduct). Such a control regime may be referred to as providing shoot-through protection for the power converter 230, 240, 250.

The method 300 further includes an action of operating, at block 330, the power converter in a discharging mode (which may be referred to using reference numeral 330) during which a discharging process is undergone. In relatively high-level terms, the action of operating the power converter 230, 240, 250 in the discharging mode 330 includes controlling the plurality of input switches to establish a current path between the first terminal of the capacitor 630 and the second terminal of the capacitor 630.

Accordingly, the action of operating the power converter 230, 240, 250 in the discharging mode 330 includes closing at least one of the high-side switches and at least one of the low-side switches, to create a current path from the first terminal of the capacitor 630 via the first input connection rail 231, 241, 251, the closed high-side switch(es) 651, 653, 655, the closed low-side switch(es) 652, 654, 656, the second input connection rail 233, 243, 253 and the routing unit 680 to the second terminal of the capacitor 630. In the context of the first example power converter 230 and the second example power converter 240, the action of operating the power converter 230, 240 in the discharging mode 330 includes maintaining both the first high-side switch 651 and the first low-side 652 and/or both the second high-side switch 653 and the second low-side switch 654 in the closed state. Otherwise, in the context of the third example power converter 250, the action of operating the power converter 250 in the charging mode 310 includes maintaining both the first high-side switch 651 and the first low-side switch 652 in the closed state, both the second high-side switch 653 and the second low-side 654 in the closed state and/or both the third high-side switch 655 and the third low-side switch 656 in the closed state.

In accordance with the above, operation of the power converter 230, 240, 250 in the discharging mode comprises simultaneously maintaining a high-side switch 651, 653, 655 and a low-side switch 652, 654, 656 belonging to the same input half-bridge in the closed state. Hence it will be appreciated that operation of the power converter 230, 240, 250 in the discharging mode 330 in the manner described above involves the adoption of control action(s) which contravene(s) the principles for preventing a shoot-through condition discussed above with respect to the running mode 620. That is, in order to operate the power converter 230, 240, 250 in the discharging mode 330, it may be necessary to override and/or disable the shoot-through protection which the data processing apparatus carrying out the method 300 may otherwise be configured to provide.

The action of operating the power converter 230, 240, 250 in the discharging mode 330 further includes forming a discharge circuit for discharging the capacitor 630 through the routing unit 680. For this purpose, the action of operating the power converter 230, 240, 250 in the discharge mode 330 may include controlling the routing unit 680 appropriately such that the resistor 684 and/or the diode 686 forms a part of the discharge circuit. Appropriate control of the routing unit 680 in the discharge mode 330 may include controlling the routing switch 682 such that the only current path between the second terminal of the capacitor 630 and the second input connection rail 233, 243, 253 includes the resistor 684 and/or the diode 686. By way of example, in the context of the routing unit topologies 680A-680C described above with reference to FIGs. 6A-6C, appropriate control of the routing unit 680 may include maintaining the routing switch 682 in the open state . By way of further example, in the context of the routing unit topologies 680D-680E described above with reference to FIGs. 6D-6E, appropriate control of the routing unit 680 may include maintaining the routing SPDT switch 682 in the second state thereof (i.e., the state not shown in FIGs. 6D-6E).

Inclusion of the resistor 684 and/or the diode 686 within the discharge circuit formed in the discharge mode 310 ensures that energy stored within the capacitor 630 prior to the power converter 230, 240, 250 being operated in the discharge mode 330 made be dissipated as heat in the resistor 684 and/or the diode 686, as the case may be.

The power converter 230, 240, 250 may be operated in the discharging mode 330 until a potential difference across the capacitor 630 has fallen to (e.g., is equal to or less than) a predetermined discharging voltage threshold. The discharging voltage threshold may be set having regard to a safe condition of the capacitor 630. For example, the discharge voltage threshold may be set as being equal to, or within a tolerance range of, a value of the potential difference across the capacitor 630 which is considered not to pose a risk to the safety of operators who may come into electrical contact with the electrical system 200 and/or the power converter 230, 240, 350. In some examples, the discharge voltage threshold may be substantially or exactly zero. When the potential difference across the capacitor 630 falls to the discharging voltage threshold, the discharging process undergone in the discharging mode 330 may be described as being complete.

A rate at which the capacitor 630 discharges to the discharge voltage threshold is dependent, at least in part, on a total impedance of the discharge circuit. Thus, a relatively lower total impedance of the charge circuit will result in faster discharging of the capacitor 630 than a relatively higher total impedance of the discharge circuit.

The topology of the routing unit 680 may generally be selected according to a preference for a length of the time taken to complete the charging process (in the charging mode 310) and/or the discharging process (in the discharging mode 330). If a relatively fast charging/discharging process (i.e., a shorter length of time taken to complete the charging/discharging process) is preferred, the routing unit topologies 680B, 680C, 680E including the diode 686 may be selected for use because the diode 686 may typically have a lower impedance than the resistor 684. On the other hand, if a relatively slow charging/discharging process (i.e., a longer length of time taken to complete the charging/discharging process) is preferred, the routing unit topologies 680A, 680C, 680D including the resistor 684 may be selected for use. If different speeds to complete the charging and discharging processes, respectively, are preferred, routing unit topologies 680C, 680E comprising both the resistor 684 and the diode 686 coupled in parallel with respect to each other may be selected for use.

To give an example, if a relatively slow charging process is preferred (e.g., for better management of inrush current(s)) and a relatively fast discharging process is preferred (e.g., for quicker return of the capacitor 630 to a safe condition), either of the routing unit topologies 680C, 680E shown by FIGs. 6C and 6E may be selected for use. Because of the orientation of the diode 686, when the routing switch 682 is controlled in the charging mode 310 as described above, conventional current may not flow from the second terminal of the capacitor 630 to the second input connection rail 233, 243, 253 through the diode 686. Therefore, conventional current must flow through the resistor 684 in order to charge the capacitor 630 in the charging mode 310. Accordingly, the effective impedance of the charge circuit is relatively high and the time taken to complete the charging process is relatively long. But, when the routing switch 682 is controlled in the discharging mode 330 as described above, conventional current may flow from the second input connection rail 233, 243, 253 to the second terminal of the capacitor 630 through the diode 686. Thus, conventional current can flow through the either the resistor 684 or the diode 686 in order to discharge the capacitor 630 in the discharging mode 330. Accordingly, the effective impedance of the discharge circuit is relatively low and the time taken to complete the discharging process is relatively short.

If a relatively fast charging process is preferred and a relatively slow discharging process is preferred, routing unit topologies which are similar to those shown by FIGs. 6C and 6E, but in which the orientation of the diode 686 has been reversed compared to the orientation shown by FIGs. 6C and 6E, may instead be selected for use.

It should be noted that the charge circuit and the discharge circuit formed in the examples described herein is disposed entirely within the power converter 230, 240, 250, which is associated with an increased safety of the power converter 230, 240, 250. In addition, the charge circuit and the discharge circuit formed in the examples described herein includes only passive components, which provides a less complex and/or more robust power converter 230, 240, 250.

Although the method 300 is described as comprising each of the actions represented by blocks 310, 320 and 330, it will be understood that methods in accordance with the present disclosure may comprise only one, or any combination, of the charging mode, the running mode and the discharging mode. Further, it will be appreciated that a power converter may only be operated in one of these modes at any one time, and so methods in accordance with the present disclosure which comprise more than one of the charging mode, the running mode and the discharging mode include selectively (e.g., alternately) operating a power converter in the charging mode, the running mode or the discharging mode, as the case may be.

Those of ordinary skill in the art will be aware of other methods for pre-charging a DC link, such as those disclosed in the applicant's European patent application publication no. EP4096086, the disclosure of which is incorporated herein by reference in its entirety.

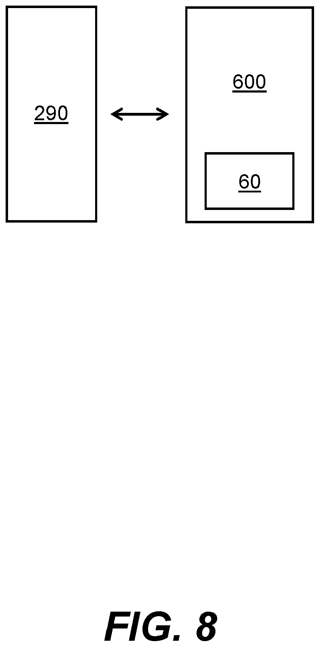

**FIG. 8** shows, highly schematically, a machine-readable medium 600 having stored thereon a computer program 60 comprising instructions which, when executed by the controller 290 provided to a power converter in accordance with the present disclosure (e.g., any of the power converters described with reference to FIGs. 3-5), cause the controller 290 to execute the method 300 described above with reference to FIG. 7.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression circuits, it will be appreciated that the present disclosure has other possible applications in other technical areas.

## Claims

1. A method of controlling a power converter comprising:
input terminals configured to receive an input voltage;
a plurality of input switches configured as one or more half-bridges, each half bridge comprising a high-side input switch and a low-side input switch; and
a capacitor couplable to the input terminals so as to receive the input voltage, the method comprising:
operating the power converter in a discharging mode which comprises closing a high-side input switch and a low-side input switch to complete a discharge circuit between first and second terminals of the capacitor.

2. The method of claim 1, comprising selectively operating the power converter in the discharging mode or a running mode, wherein operating the power converter in the running mode comprises controlling the plurality of input switches to generate an output voltage based on the input voltage.

3. The method of claim 2, comprising selectively operating the power converter in the discharging mode, the running mode or a charging mode, wherein operating the power converter in the charging mode comprises maintaining each high-side switch and/or each low-side switch in an open state and wherein, in the charging mode, the capacitor is electrically coupled to the pair of input terminals.

4. The method of any preceding claim, wherein the power converter further comprises a resistor couplable in series with the capacitor such that a series combination of the capacitor and resistor is coupled in parallel with the input terminals and the or each half-bridge.

5. The method of claim 4, wherein the power converter further comprises a routing switch couplable in series with the capacitor such that a series combination of the capacitor and routing switch is coupled in parallel with the input terminals and the or each half-bridge; wherein operating the power converter in the running mode includes controlling the routing switch to provide a current path between the capacitor and one of the plurality of input switches which bypasses the resistor; and wherein the resistor forms a part of the discharge circuit.

6. The method of any preceding claim, wherein the power converter further comprises a diode couplable in series with the capacitor such that a series combination of the capacitor and diode is coupled in parallel with the input terminals and the or each half-bridge.

7. The method of claim 6, wherein the power converter further comprises a routing switch couplable in series with the capacitor such that a series combination of the capacitor and routing switch is coupled in parallel with the input terminals and the or each half-bridge; wherein operating the power converter in the running mode includes controlling the routing switch to provide a current path between the capacitor and one of the input switches which bypasses the diode; and wherein the diode forms a part of the discharge circuit.

8. The method of claim 6 or claim 7, wherein the resistor and the diode are coupled in parallel with each other.

9. The method of any preceding claim, wherein operating the power converter in the discharging mode comprises closing a high-side switch and a low-side switch of the same half-bridge.

10. The method of any preceding claim, wherein the discharge circuit completed in the discharging mode is entirely disposed within the power converter.

11. A power converter comprising input terminals, a plurality of input switches, a capacitor and means adapted to carry out the method of any preceding claim.

12. A computer program comprising instructions to cause the power converter of claim 11 to execute the steps of the method of any of claims 1 to 10.

13. A computer-readable medium having stored thereon the computer program of claim 12.

14. An electrical system comprising a multiplicity of power converters, each power converter being in accordance with the power converter of claim 11.

15. A transport refrigeration unit comprising the power converter of claim 11 or the electrical system of claim 14.

## Amended claims

### Amended claims in accordance with Rule 137(2) EPC.

1. A method (300) of controlling a power converter (230, 240, 250) comprising:
input terminals (232, 234, 242, 244, 252, 254) configured to receive an input voltage;
a plurality of input switches (651, 652, 653, 654, 655, 656) configured as one or more half-bridges, each half bridge comprising a high-side input switch (651, 653, 655) and a low-side input switch (652, 654, 656);
a capacitor (630) couplable to the input terminals so as to receive the input voltage; and
a diode (686) couplable in series with the capacitor such that a series combination of the capacitor and diode is coupled in parallel with the input terminals and the or each half-bridge,
**characterised in that** the method comprises:
operating the power converter in a discharging mode (330) which comprises closing a high-side input switch and a low-side input switch to complete a discharge circuit containing the diode between first and second terminals of the capacitor.

2. The method (300) of claim 1, comprising selectively operating the power converter (230, 240, 250) in the discharging mode (330) or a running mode (320), wherein operating the power converter in the running mode comprises controlling the plurality of input switches (651, 652, 653, 654, 655, 656) to generate an output voltage based on the input voltage.

3. The method (300) of claim 2, comprising selectively operating the power converter (230, 240, 250) in the discharging mode (330), the running mode (320) or a charging mode (310), wherein operating the power converter in the charging mode comprises maintaining each high-side switch (651, 653, 655) and/or each low-side switch (652, 654, 656) in an open state and wherein, in the charging mode, the capacitor (630) is electrically coupled to the pair of input terminals (232, 234, 242, 244, 252, 254).

4. The method (300) of any preceding claim, wherein the power converter (230, 240, 250) further comprises a resistor (684) couplable in series with the capacitor (630) such that a series combination of the capacitor and resistor is coupled in parallel with the input terminals (232, 234, 242, 244, 252, 254) and the or each half-bridge.

5. The method (300) of claim 4, wherein the power converter (230, 240, 250) further comprises a routing switch (682) couplable in series with the capacitor (630) such that a series combination of the capacitor and routing switch is coupled in parallel with the input terminals (232, 234, 242, 244, 252, 254) and the or each half-bridge; wherein operating the power converter in the running mode (610) includes controlling the routing switch to provide a current path between the capacitor and one of the plurality of input switches (651, 652, 653, 654, 655, 656) which bypasses the resistor; and wherein the resistor forms a part of the discharge circuit.

6. The method (300) of any preceding claim, wherein the power converter (230, 240, 250) further comprises a routing switch (682) couplable in series with the capacitor (630) such that a series combination of the capacitor and routing switch is coupled in parallel with the input terminals (232, 234, 242, 244, 252, 254) and the or each half-bridge; wherein operating the power converter in the running mode (610) includes controlling the routing switch to provide a current path between the capacitor and one of the input switches (651, 652, 653, 654, 655, 656) which bypasses the diode (686).

7. The method (300) of claim 4 and optionally claim 5 or claim 6, wherein the resistor (684) and the diode (686) are coupled in parallel with each other.

8. The method (300) of any preceding claim, wherein operating the power converter (230, 240, 250) in the discharging mode comprises closing a high-side switch (651, 653, 655) and a low-side switch (652, 654, 656) of the same half-bridge.

9. The method (300) of any preceding claim, wherein the discharge circuit completed in the discharging mode is entirely disposed within the power converter (230, 240, 250).

10. The method (300) of any preceding claim, wherein the power converter (230, 240, 250) is configured to supply an output voltage to a winding (271, 281, 282, 283) of a motor (270, 280), and wherein the winding forms a part of the discharge circuit.

11. A power converter (230, 240, 250) comprising input terminals (232, 234, 242, 244, 252, 254), a plurality of input switches (651, 652, 653, 654, 655, 656), a capacitor (630), a diode (686) and means (290) adapted to carry out the method (300) of any preceding claim.

12. A computer program (60) comprising instructions to cause the power converter (230, 240, 250) of claim 11 to execute the steps of the method (300) of any of claims 1 to 10.

13. A computer-readable medium (600) having stored thereon the computer program (60) of claim 12.

14. An electrical system (200) comprising a multiplicity of power converters (230, 240, 250), each power converter being in accordance with the power converter of claim 11.

15. A transport refrigeration unit (400) comprising the power converter (230, 240, 250) of claim 11 or the electrical system (200) of claim 14.
